# EUROPEAN PATENT SPECIFICATION

(11) **EP 4 227 677 B1**
(45) Date of publication and mention of the grant of the patent: **16.04.2025**
(21) Application number: 21948695.8
(22) Date of filing: 31.12.2021
(51) Int. Cl.: G01N 30/12, G01N 30/06, G01N 30/88, G01N 35/04

(54) **SUBSTANCE PYROLYSIS REAL-TIME ONLINE ANALYSIS DEVICE AND METHOD FOR USING SAME**
SUBSTANZPYROLYSE-ECHTZEIT-ONLINE-ANALYSEVORRICHTUNG UND VERFAHREN ZUR VERWENDUNG DAVON
DISPOSITIF D'ANALYSE EN LIGNE EN TEMPS RÉEL PAR PYROLYSE DE SUBSTANCES ET SON PROCÉDÉ D'UTILISATION

(30) Priority: 22.12.2021 CN 202111578066
(43) Date of publication of application: 16.08.2023
(73) Proprietor: China Tobacco Yunnan Industrial Co., Ltd, Kunming, Yunnan 650231 (CN)
(72) Inventor: YANG, Ji, Kunming, Yunnan 650231 (CN); LIU, Chunbo, Kunming, Yunnan 650231 (CN); LIU, Zhihua, Kunming, Yunnan 650231 (CN); LIU, Jinyun, Kunming, Yunnan 650231 (CN); TANG, Shiyun, Kunming, Yunnan 650231 (CN); ZHU, Ruizhi, Kunming, Yunnan 650231 (CN); SI, Xiaoxi, Kunming, Yunnan 650231 (CN); ZHANG, Fengmei, Kunming, Yunnan 650231 (CN); JIANG, Wei, Kunming, Yunnan 650231 (CN); LI, Zhenjie, Kunming, Yunnan 650231 (CN); MIAO, Mingming, Kunming, Yunnan 650231 (CN)
(74) Representative: Gille Hrabal Partnerschaftsgesellschaft mbB Patentanwälte
(86) International application number: PCT/CN2021/143565
(87) International publication number: WO 2023/115636

(56) References cited:
- CN-A- 102 735 786
- CN-A- 104 950 065
- CN-A- 108 627 369
- CN-A- 110 333 127
- CN-A- 111 487 357
- CN-A- 111 751 479
- CN-A- 113 083 190
- CN-B- 104 198 319
- CN-U- 208 313 912
- CN-U- 211 978 494
- JP-A- 2000 009 711
- US-A- 5 866 072

## Description

### TECHNICAL FIELD

The present invention belongs to the field of detection, and in particular, to the technical field of a device for real-time online analysis of substance pyrolysis and a corresponding real-time online analysis method, as defined in the preambles of independent claims 1 and 8.

### BACKGROUND

Many inorganic and organic substances decompose when they are heated to a certain extent. Organic pyrolysis processes with industrial significance often have different names due to specific processes. Pyrolysis reaction in isolated air is called dry distillation, e.g., coal dry distillation and wood dry distillation; the process of methane pyrolysis to produce carbon black is called thermal decomposition; pyrolysis of alkylbenzene or alkylnaphthalene to produce benzene or naphthalene is often called thermal dealkylation; production of ketene from acetone is called acetone cracking. Pyrolysis process of hydrocarbons is often distinguished as thermal cracking and decomposition. Real-time online analysis of the products obtained during pyrolysis is of great significance for controlling reaction process, optimizing reaction conditions, and changing reaction substances. For instance, tobacco is a biomass with complex components, and its pyrolysis products have a crucial impact on cigarette quality. Studies show that 1/3 of chemical components in the smoke directly derive from tobacco, and the rest are produced in a series of complex processes such as distillation, decomposition, burning and polymerization during cigarette burning; thus, it is necessary to establish a model system suitable for tobacco biomass pyrolysis, and study pyrolysis and migration of tobacco components at any temperature.

The prior art mainly uses thermogravimetric-differential thermal analysis (TG/DTA) and pyrolyzer-gas chromatography mass spectrometry (Py-GC/MS) to study tobacco pyrolysis process. Py-GC/MS is mainly for rapid decomposition of substances at a temperature point, followed by analysis of pyrolysis products, it is impossible to investigate the whole process of pyrolysis of substances with temperature changes. For non-volatile substances in tobacco (e.g., sugars, amino acids, polyphenols, etc.), pyrolysis products at a single temperature are obtained; thus, it is difficult to recognize compound pyrolysis at a specific temperature with such information. Besides, since the content of pyrolysis products obtained by pyrolysis is low, generally at the nanogram level, even less than residual substances, as pyrolysis products go through gas chromatography-mass spectrometry analysis, there may exist qualitative and quantitative inaccuracies.

TG/DTA can provide stable reaction conditions during programmed heating, which is the most ideal experimental tool in tobacco pyrolysis research; however, specific substances and their content of tobacco pyrolysis cannot be obtained only by using TG/DTA, and other device must be combined to analyze thermogravimetric escaped components. However, there is still a lack of an effective combined device for analysis of thermogravimetric escaped components, thus seriously restricting application of thermogravimetric analysis in tobacco pyrolysis research. It is still difficult for the current commercially available combined systems to play a key role in tobacco pyrolysis research due to the following facts: thermogravimetric-mass spectrometry (TG-MS) has not yet realized analysis of overlapping peaks; it is difficult to identify compounds with the same functional groups by thermogravimetric analysis-Fourier transform infrared spectroscopy (TG-FTIR) or thermogravimetric analysis-Fourier transform infrared spectroscopy-mass spectrometry (TG-FTIR-MS), besides, substances existing in the whole substance pyrolysis process are collected at the infrared peak, real-time substance collection at a certain temperature point or segment cannot be achieved. In order to study substance pyrolysis at any temperature point or segment, it is necessary to set experimental conditions at certain temperature point to carry out separate experiments in the prior art, e.g., analysis of pyrolysis products and their content at eight temperature points or segments in the whole process requires eight experiments, which is time-consuming and a waste of resources.

It is reported that, by switching of six-way valve or eight-way valve, targeted pyrolysis products can be captured for subsequent analysis. However, the escaped gas decomposed by the substances has a certain temperature, and switching of the valve at room temperature can easily make escaped pyrolysis products to condense in the valve, causing pollution of the valve, the captured substances may also be those condensed after a plurality of experiments, thus analysis results are not reliable.

Publication CN 111 487 357 A discloses a chromatographic enrichment and analysis system and method for trace and ultra-trace components. The system comprises a sample injection system (1), a vaporizing chamber (21), an enriching system (3), a heat preservation box (5), a sample collecting system (6), a focusing trap (4), a chromatographic analysis column system (22), a detector (23) and an electronic control system; the analysis method is characterized in that a sample enrichment working mode, a thermal desorption working mode and an analysis blowback working mode are completed through the combination of a four-way valve of the enriching system (3) and an electronic switch valve box (7). CN 104 198 319 B relates to a device for studying the cracking process of cigarette additives, including: a thermogravimetric analyzer, a six-way valve, a cold trap and a gas chromatography/mass spectrometry (GC/MS) coupler; the six-way valves are I, II, III, IV, V, and VI in counterclockwise direction; the I is connected to the thermogravimetric analyzer; the II is connected to the end of the cold trap; the III is connected to the inlet port of GC/MS; the IV is the carrier gas inlet; the V is connected to the other end of the cold trap; the VI is the carrier gas outlet; this device has a wide range of applications and can be used both for solid additives and solid additives. No. III is connected to the inlet of the gas chromatograph/mass spectrometer; No. IV is the inlet of the carrier gas; No. V is connected to the other end of the cold trap; No. VI is the outlet of the carrier gas; the device has a wide range of applicability, which is applicable to the cracking of solid tobacco additives as well as the tobacco additives in the liquid form, and has a large sample loading capacity, is easy to be operated, and has a good reproducibility of the analytical results. The present discloses an application method for studying the cracking process of cigarette additives by using the above device. US 5 866 072 A relates to an apparatus for sequentially pyrolyzing a plurality of samples held in sample tubes, the apparatus comprising a substantially vertical passage through which tubes carrying the samples may be passed; an upper gas-tight valve for closing off the upper end of the passage; a lower gas-tight valve for holding a sample tube in the passage; a distribution valve directing purge gas and carrier gas to the top end of the passage and for passing pyrolyzed sample from the bottom of the passage to an analytical device; and an electrical heating element for heating the passage to temperatures at which a sample will be pyrolyzed.

Online analysis of complex escaped components of substance pyrolysis through a single experiment at several temperature points or segments is a key problem that needs to be solved urgently in the current substance pyrolysis research.

The present invention aims to solve the above-mentioned problems.

### Summary

The present invention provides a real-time online analysis device for substance pyrolysis, the capturing system of the device has a cooling cavity and a heating cavity, the cooling cavity can condense and adsorb and capture pyrolysis products at the set temperature points or segments, the heating cavity can thermally desorb pyrolysis products, real-time online separation and analysis can be performed.

The technical solutions of the present invention are as follows.

The present invention relates to a real-time online analysis device for substance pyrolysis according to the attached claim 1.

Preferably, the length of the cooling cavity 22 is no less than that of a collecting tube 241.

Preferably, the length of the heating cavity 23 is no less than that of a collecting tube 241.

Preferably, the sliding distance is no less than the length of a collection tube 241. Preferably, the rotary collector 24 can rotate 360°clockwise or counterclockwise.

Preferably, the purging gas pipe 25 is connected to the purging gas cylinder 251.

Preferably, inside the cooling gas device 222 is liquid nitrogen, and the cooling temperature ranges from room temperature to -200°C; temperature of the heating tube 231 ranges from room temperature to 1000°C, and the heating rate range is 1°C/ s ~ 300°C/s.

Preferably, the pyrolyzing system 1 includes a pyrolyzing device 11 capable of providing programmed heating; gas is introduced into the pyrolyzing device 11 as carrier gas, which can be one or more of air, nitrogen, oxygen, helium, and argon, the gas flow rate is 0~2000 mL/min; the pyrolyzing system 1 can collect substances during weight loss, heat flux, enthalpy and other programs in real-time; preferably, comprehensive thermal analyzer is selected; the pyrolyzing system 1 can set a plurality of temperature points or segments based on substance pyrolysis temperature, and the setting program is set by the controlling system 4.

Preferably, the testing system 3 includes a separation device 31 and a detection device 32; one end of the separation device 31 is in airtight connection with the heating cavity 23 through the gas pipeline 5, and the other end is connected with the detection device 32.

Preferably, the separation device 31 includes but is not limited to a gas chromatograph; the detection device 32 includes but is not limited to a mass spectrometer.

Preferably, the purging gas in the purging gas pipe 25 is one of nitrogen, helium or argon; the gas flow rate is 0-2000 mL /min.

Preferably, the collection tubes 241 are no less than eight.

According to claim 8, the present invention further relates to a method for real-time online analysis of substance pyrolysis by using the device mentioned above, including the following steps:
The substances to be analyzed are placed in the pyrolyzing device 11, when the temperature is programmed to reach a set temperature point or segment under the control of the controlling system 4, the substances are heated at the set temperature point or segment for pyrolysis;
The rotary collector (24) moves along the horizontal moving slot 21 towards the cooling cavity 22, and fully extends a collection tube 241 carried by it into the cooling cavity 22, pyrolysis products are brought into the collection tube 241 by the carrier gas, the cooling tube 221 cools the carrier gas to make pyrolysis products condense and adsorb in the collection tube 241; after collecting pyrolysis products at the temperature point or segment, the collecting tube 241 is rotated 180° by the rotary collector (24), and moves along the horizontal moving slot 21 towards the heating cavity 23;
The collecting tube 241 with pyrolysis products is fully extended into the heating cavity 23, and the heating tube 231 heats the heating cavity 23, the pyrolysis products condensed and adsorbed in the collecting tube 241 are heated for thermal desorption, which is fed by the purging gas in the purging gas pipe 25 into the separation device 31, after separated by the separation device 31, pyrolysis products enter the detection device 32 and are analyzed online by the detection device 32;
Then, the substances at other temperature points or segments are pyrolyzed; by repeating the above steps, real-time online analysis of substance pyrolysis at a plurality of set temperature points or segments can be carried out.

The present invention has the following beneficial effects:
1. The device of the present invention can provide real-time online capture, separation and analysis at a plurality of temperature points or segments for one-time substance pyrolysis. The device of the present invention can detect and analyze real-time changes of one-time substance pyrolysis products, as well as changes of pyrolysis product content with temperature changes.
2. The device of the present invention rapidly captures pyrolysis products in the substance pyrolysis process by cooling, then separates and analyzes them by thermal desorption to realize closed integration experiment including the whole process of programmed heating pyrolysis, cold-trap capture, online thermal desorption, automatic injection, separation and analysis, so that substance pyrolysis at a slower heating rate can be studied, as well as qualitative and relative quantitative analysis of pyrolysis product components of substances can be realized, real-time variation of the pyrolysis components can be obtained.
3. The present invention uses several rotatable collection tubes to capture pyrolysis products at several temperature points or segments in a cold trap, then feeds them into the separation system and the detection system through high-temperature thermal desorption. The use of cold-trap capture effectively avoids occurrence of secondary reactions of pyrolysis products during high-temperature process at the capturing stage. The application of high-temperature thermal desorption effectively avoids condensation of pyrolysis products at the analysis stage in the conveying pipes or switching of valves, thus greatly improving reliability of capturing and analyzing substances as well as accuracy of the analysis method.
4. The device of the present invention, by combining kinetic study of programmed heating of the pyrolyzing device, can sort and analyze thermochemical reaction of substances while monitoring substance pyrolysis, and establish a thermochemical reaction model to intervene pyrolysis chemical reaction through controlling reaction process, optimizing reaction conditions and changing reaction substances, so that pyrolysis reaction is carried out in a beneficial direction in controllable conditions.

### BRIEF DESCRIPTION OF THE DRAWINGS

FIG.1 is a schematic view of the device for substance pyrolysis real-time online analysis of the present invention; the arrow direction in the pyrolyzing system is the advance direction of carrier gas.
FIG.2 shows thermogravimetric, heat flux and derivative thermogravimetric analysis of a cigarette brand tobacco material A of embodiment 1.
FIG.3 shows total ion flow of pyrolysis products of a cigarette brand tobacco material A at 31 °C~ 90°C of embodiment 1.
FIG.4 shows changes of main pyrolysis product content of a cigarette brand tobacco material A from 30°C to 900°C of embodiment 1.
FIG.5 shows thermogravimetric, heat flux and derivative thermogravimetric analysis of a cigarette brand tobacco material B of embodiment 2.
FIG.6 shows the total ion flow of main pyrolysis products of a cigarette brand tobacco material B from 71°C to 120°C of embodiment 2.
FIG.7 shows changes of main pyrolysis product content of a cigarette brand tobacco material B from 30°C to 600°C of embodiment 2.
FIG.8 shows total ion flow of main pyrolysis products of a cigarette brand tobacco material B from 30°C to 600°C of comparison 2.

List of signs in the drawings: 1. A pyrolyzing system; 11. A pyrolyzing device; 2. A capturing system; 21. A horizontal moving slot; 22. A cooling cavity; 221. A cooling tube; 222. A cooling gas device; 23. A heating cavity; 231. A heating tube; 24. A rotary collector; 241. A collection tube; 25. A purging gas pipe; 251. A purging gas cylinder; 3. A testing system; 31. A separation device; 32. A detection device; 4. A controlling system; 5. A gas pipeline.

### DETAILED DESCRIPTION OF THE EMBODIMENTS

The present invention is further illustrated below by the embodiments, but not limited to the embodiments. Experimental methods with no specific conditions in the embodiments, are usually in accordance with the conventional conditions and conditions described in the manual, or general equipment, materials, reagents, etc. used in the conditions recommended by manufacturers, unless otherwise specified, are available commercially. Raw materials required in the following embodiments and comparison are all commercially available.

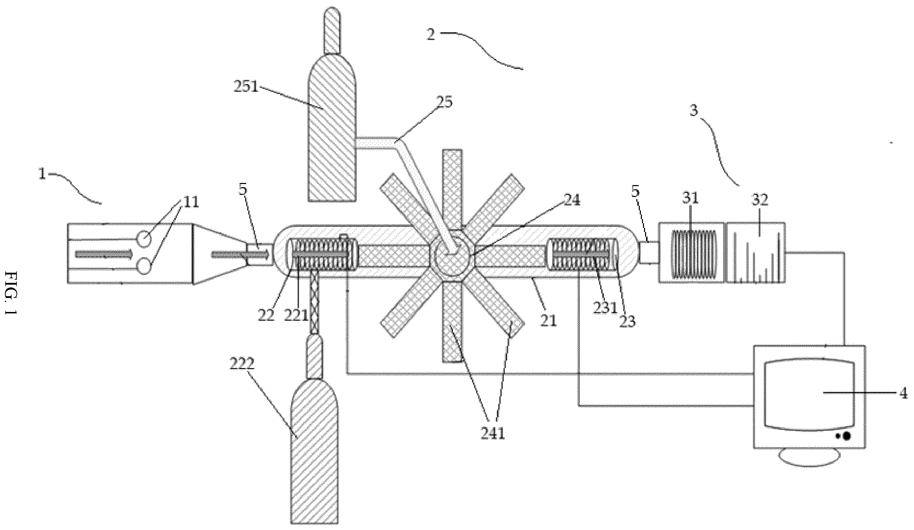

A real-time online analysis device for substance pyrolysis as is shown in FIG.1, including: a pyrolyzing system 1, a capturing system 2, a testing system 3 and a controlling system 4; the pyrolyzing system 1, the capturing system 2 and the testing system 3 are connected with the controlling system 4; the controlling system 4 controls pyrolysis of the entire device, capturing of pyrolysis products, and real-time separation and analysis, the capturing system 2 has a cooling cavity 22 and a heating cavity 23 inside, temperature of the cooling cavity 22 ranges from room temperature to -200°C, and temperature of the heating cavity 23 ranges from room temperature to 1000°C.

Wherein, the capturing system 2 includes the following components: a horizontal moving slot 21; a cooling cavity 22 arranged at one end of the horizontal moving slot 21; the cooling cavity 22 has a cooling tube 221, which is connected with a cooling gas device 222; the cooling cavity 22 is in airtight connection with the pyrolyzing system 1 through a gas pipeline 5; the length of the cooling cavity 22 is no less than that of a collecting tube 241; a heating cavity 23, arranged at the other end of the horizontal moving slot 21; the heating cavity 23 has a heating tube 231; the heating cavity 23 is in airtight connection with the testing system 3 through the gas pipeline 5; the length of the heating cavity 23 is no less than that of a collecting tube 241; a rotary collector 24 arranged on a horizontal moving slot 21 between the cooling cavity 22 and the heating cavity 23, which can slide along the horizontal moving slot 21 towards the cooling cavity 22 or the heating cavity 23, the sliding distance is no less than the length of a collection tube 241; a plurality of collecting tubes 241 are provided on a rotary collector 24, and the plurality of collecting tubes 241 are arranged on the radius of the rotary collector 24; preferably, the collection tubes 241 are no less than eight; the rotary collector 24 can rotate 360° clockwise or counterclockwise; a purging gas pipe 25 is connected to the rotary collector 24; the purging gas pipe 25 is connected to the purging gas cylinder 251.

Wherein, inside the cooling gas device 222 is liquid nitrogen, and the cooling temperature ranges from room temperature to -200°C; temperature of the heating tube 231 ranges from room temperature to 1000°C, and the heating rate range is 1°C/s ~ 300°C /s.

Wherein, the pyrolyzing system 1 includes a pyrolyzing device 11 capable of providing programmed heating; gas is introduced into the pyrolyzing device 11 as carrier gas, which can be one or more of air, nitrogen, oxygen, helium, and argon, the gas flow rate is 0~2000 mL/min; the pyrolyzing system 1 can collect substances during weight loss, heat flux, enthalpy and other programs in real-time, preferably, comprehensive thermal analyzer is selected; the pyrolyzing system 1 can set a plurality of temperature points or segments based on substance pyrolysis temperature, and the setting program is set by the controlling system 4.

Wherein, the testing system 3 includes a separation device 31 and a detection device 32; one end of the separation device 31 is in airtight connection with the heating cavity 23 through the gas pipeline 5, and the other end is connected with the detection device 32; preferably, the separation device 31 includes but is not limited to a gas chromatograph; the detection device 32 includes but is not limited to a mass spectrometer.

Wherein, the purging gas in the purging gas pipe 25 is one of nitrogen, helium and argon; the gas flow rate is 0-2000 mL/min.

The method for real-time online analysis of substance pyrolysis by using the device of the present invention includes the following steps:
Place the pyrolysis substances to be analyzed in the pyrolyzing device 11, when the temperature is programmed to reach a set temperature point or segment under the control of the controlling system 4, the substances are heated at the set temperature point or segment for pyrolysis;
The rotary collector (24) moves along the horizontal moving slot 21 towards the cooling cavity 22, and fully extends a collection tube 241 carried by it into the cooling cavity 22, pyrolysis products are brought into the collection tube 241 by the carrier gas, the cooling tube 221 cools the carrier gas to make pyrolysis products condense and adsorb in the collection tube 241; after collecting pyrolysis products at the temperature point or segment, the collecting tube 241 is rotated 180° by the rotary collector (24), and moves along the horizontal moving slot 21 towards the heating cavity 23;
The collecting tube 241 with pyrolysis products is fully extended into the heating cavity 23, and the heating tube 231 heats the heating cavity 23, the pyrolysis products condensed and adsorbed in the collecting tube 241 are heated for thermal desorption, which are fed by the purging gas in the purging gas pipe 25 into the separation device 31, after separated by the separation device 31, pyrolysis products enter the detection device 32 and are analyzed online by the detection device 32;
Then, the substances at other temperature points or segments are pyrolyzed; by repeating the above steps, real-time online analysis of substance pyrolysis at a plurality of set temperature points or segments can be carried out.

Embodiment 1: Real-time online analysis of pyrolysis of a cigarette brand tobacco material A by using the device of the present invention.

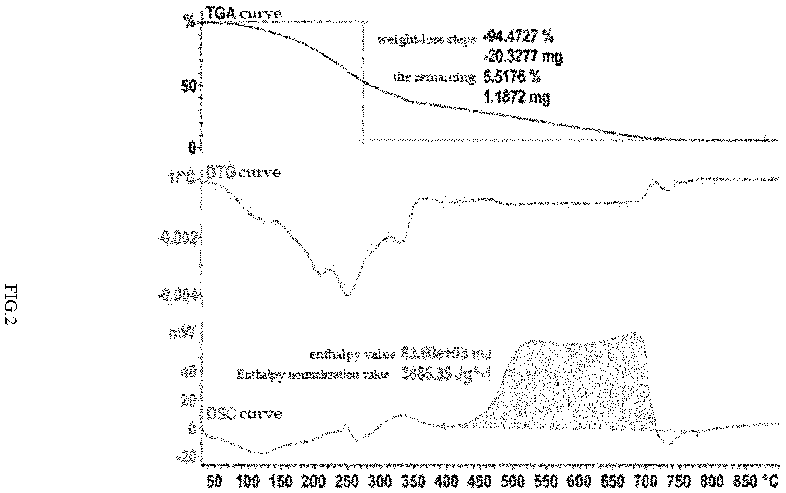

Before substance pyrolysis analysis, the pyrolyzing device 11 is kept at 800°C for 10min to remove impurities in the pyrolyzing device 11, weigh a cigarette brand of tobacco material A of 5.00mg and place it in the pyrolyzing device 11; the heating program is as follows: increase the initial temperature from 30°Cto 900°C at the rate of 5 °C /min, holding for 10min, the air is carrier gas, and gas flow is 50 mL/min. Thermogravimetric, heat flux and derivative thermogravimetric analysis of a cigarette brand tobacco material A are shown in FIG.2.

As is shown in FIG.2, the collecting program of sixteen temperature segments of main obvious thermal weight-loss steps of the tobacco material is shown in Table 1, the collection tubes are set to sixteen, collect sixteen groups of pyrolysis products at various temperature segments during the whole heating program; liquid nitrogen is used to rapidly cool pyrolysis products in the collection tube at a cooling temperature of -80°C.

**Table 1 Capturing tube collecting number and temperature segment of tobacco material A**

| **Capturing tube No.** | **1** | **2** | **3** | **4** | **5** | **6** | **7** | **8** |
|---|---|---|---|---|---|---|---|---|
| Thermal weight-loss temperature segment | Room temperatu re ~30°C | 31°C~ 90°C | 91°C~ 160°C | 161°C~ 180°C | 181°C~ 200°C | 201°C~ 220°C | 221°C~ 250°C | 251°C~ 300°C |

| **Capturing tube No.** | **9** | **10** | **11** | **12** | **13** | **14** | **15** | **16** |
|---|---|---|---|---|---|---|---|---|
| Thermal weight-loss temperature segment | 301°C~ 340°C | 341°C ~400 °C | 401°C ~ 420°C | 421°C~ 500°C | 501°C~ 550°C | 551°C~ 600°C | 601°C~ 650°C | 651°C~ 800°C |

After sixteen pyrolysis products are completely collected, they are rotated 360° by the rotary collector and moves horizontally, the collecting tube is fed into the heating cavity for thermal desorption, and nitrogen is used as purging gas, gas flow rate and thermogravimetric flow rate are consistent: 50mL/min; start thermal desorption heating program: increase from room temperature to 900°C at the rate of 20°C/s.

The separation device 31 is chromatograph: chromatographic column is DB-5MS capillary column (30m × 0.25mm, 0.25 µm), inlet temperature is 250°C; carrier gas is helium; flow rate is 0.8 mL/min; injection volume is 1 µL; split-flow ratio is 5:1; heating program conditions are as follows: initial temperature is 50°C, holding for 10min, increase to 280°C at the rate of 10°C/min, holding for 10min.

The detection device 32 is a mass spectrometer; ion source is EI source, ion source temperature is 230°C; solvent delay time is 7.5min, mass spectrometry scanning range is 30-450amu; electron energy is 70eV and detection method is full scan.

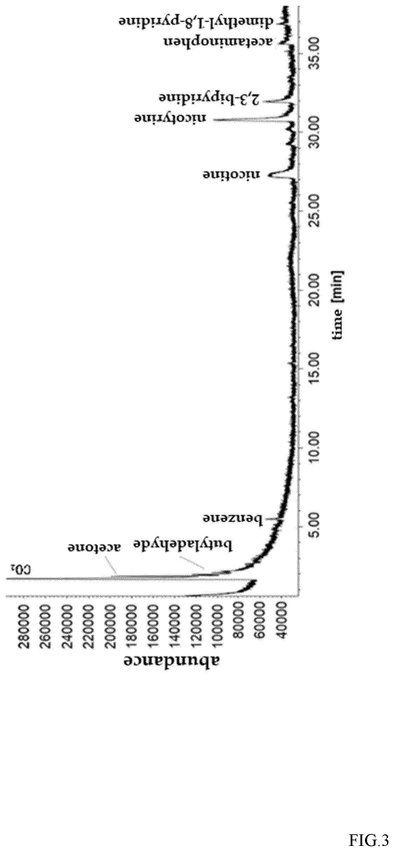

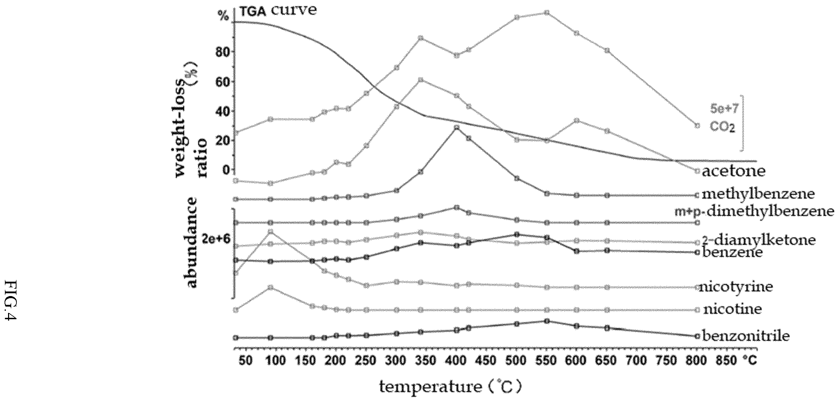

The total ion flow diagram of pyrolysis products of a cigarette brand tobacco material A heated to 31 °C~ 900°C is shown in FIG.3, changes of main pyrolysis product content with temperature changes from 30°Cto 900°C are shown in FIG.4.

Thus, the device of the present invention can detect and analyze real-time changes of pyrolysis products within a certain temperature range, as well as changes of pyrolysis product content with temperature changes. The above effects cannot be achieved by the prior art, thus having unique advantages.

Embodiment 2: Real-time online analysis of pyrolysis of a cigarette brand tobacco material B by using the device of the present invention.

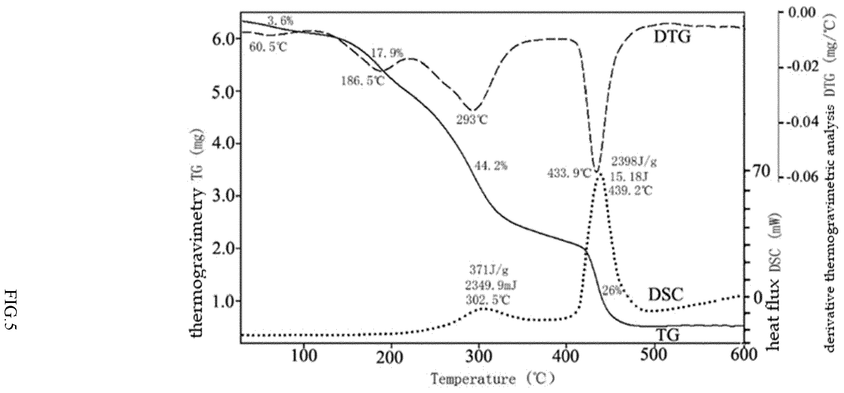

Before substance pyrolysis analysis, the pyrolyzing device 11 is kept at 800°C for 10min to remove impurities in the pyrolyzing device 11, weigh a cigarette brand of tobacco material B of 5.00mg and place it in the pyrolyzing device 11; the heating program is as follows: increase the initial temperature from 30°Cto 600°C at the rate of 5 °C /min, holding for 10min, the air is carrier gas, and gas flow is 40mL/min. Thermogravimetric, heat flux and derivative thermogravimetric analysis of a cigarette brand tobacco material B are shown in FIG.5.

As is shown in FIG.5, tobacco material B has four thermal weight-loss steps, weight-loss ratio of each step is inconsistent: 3.6% for 30.3~106.3 °C, 17.9% for 106.6~219.3°C, 44.2% for 219.3~392°C, and 26% for 392.2~500°C. The collection program of eight temperature segments is shown in Table 2, the collection tube is set to eight, collect eight groups of pyrolysis products at various temperature segments during the whole heating program. The pyrolysis products in the collection tube are rapidly cooled by liquid nitrogen at a cooling temperature of-40°C.

**Table 2 Capturing tube collecting number and temperature segment of tobacco material B**

| **Capturing tube No.** | **1** | **2** | **3** | **4** | **5** | **6** | **7** | **8** |
|---|---|---|---|---|---|---|---|---|
| Thermal weight-loss temperature segment | 30~ 70°C | 71~ 120°C | 121~ 210°C | 211~ 230°C | 231~ 320°C | 321~ 400°C | 401~ 500°C | 501~ 600°C |

After completely collecting eight pyrolysis products, they are rotated 360° by the rotary collector and move horizontally, feed the collection tube into the heating cavity for thermal desorption, using nitrogen as the purging gas, gas flow and thermogravimetric flow are consistent: 40mL/min; start thermal desorption heating program: increase from room temperature to 900°C at the rate of 10°C/s.

The separation device 31 is chromatograph: the conditions are as follows: chromatographic column is DB-5MS capillary column (30 m×0.25 mm, 0.25 µm), inlet temperature is 250°C; the carrier gas is helium; the flow rate is 0.8 mL/min. injection volume is 1 µL and split-flow ratio is 5:1; heating program is as follows: the initial temperature is 50°C, holding for 10 min, increase to 230°C at the rate of 2°C /min, then increase to 250°C at the rate of 10°C/min, holding for 10 min.

The detection device 32 is a mass spectrometer; ion source is EI source, ion source temperature is 230 °C; quadrupole temperature is 150 °C; no solvent delay, mass spectrometry scanning range is 30-450amu; electron energy is 70eV and detection method is full scan.

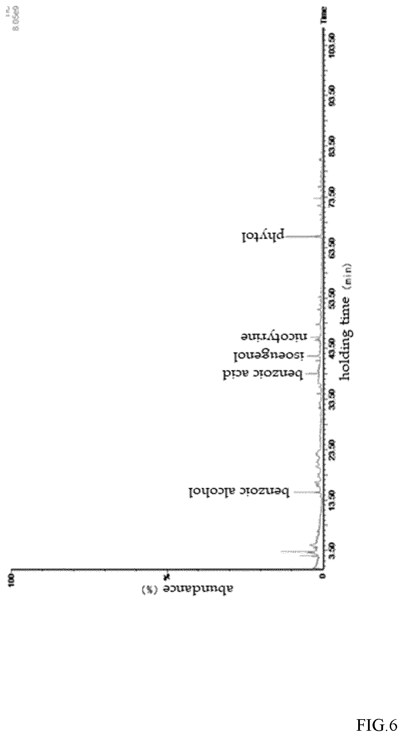

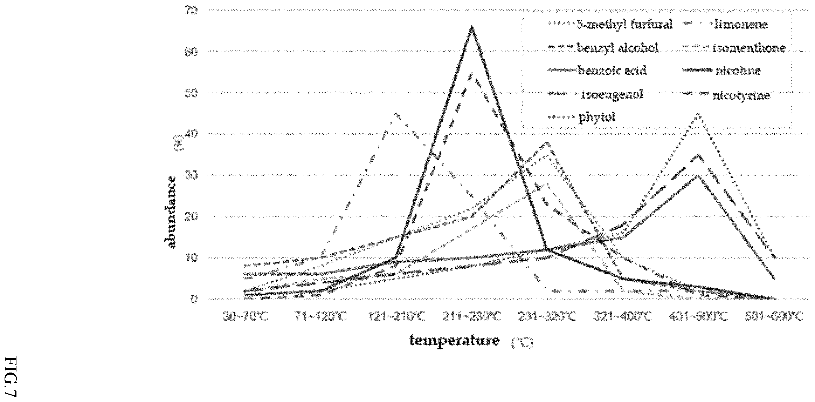

As to the cigarette brand tobacco material B, due to the use of cold-trap capture, as well as thermal desorption and thermal purge of the present invention, a total of 83 pyrolysis products including aldehyde ketones, esters, organic acids, pyrazines, furanones and phenols are detected during the whole pyrolysis process. Wherein, the total ion flow diagram of pyrolysis products at 71°C~120°C is shown in FIG.6; nine representative substances with high content are selected from 83 pyrolysis products, the content changes from 30°C to 600°C are shown in FIG.7.

Therefore, it can be seen that pyrolysis products are captured and analyzed at four main weight-loss stages of thermogravimetric by using the real-time online analysis device of the present invention, pyrolysis products of tobacco material B include the following substances at four main regions: region 1: limonene is mainly produced at 121~210 °C; region 2: nicotine and nicotyrine are mainly produced at 211~230 °C; region 3: 5-methylfuranaldehyde, benzyl alcohol and isomenthone are mainly produced at 231~320°C; region 4: benzoic acid, isoeugenol and phytol are mainly produced at 401~500°C, main pyrolysis products at the maximum weight-loss stage include benzoic acid, isoeugenol and phytol.

By using the device of the present invention, main pyrolysis products at four main weight-loss stages of the tobacco material B are determined from the process to the result, as well as their changes with the temperature. This cannot be achieved by the prior art.

Comparison: thermogravimetric-gas chromatography-mass spectrometry analysis of a cigarette brand tobacco material B of the prior art.

Before substance pyrolysis analysis, the pyrolyzing device 11 is kept at 800°C for 10min to remove impurities in the pyrolyzing device 11, a cigarette brand of tobacco material B of 5.00mg is weighed and placed in the pyrolyzing device 11; the heating program is as follows: increase initial temperature from 30°Cto 600°C at the rate of 5°C /min, holding for 10min, the air is carrier gas, and carrier gas flow is 40mL/min. Thermogravimetric, heat flux and derivative thermogravimetric analysis of a cigarette brand tobacco material B are shown in FIG.5.

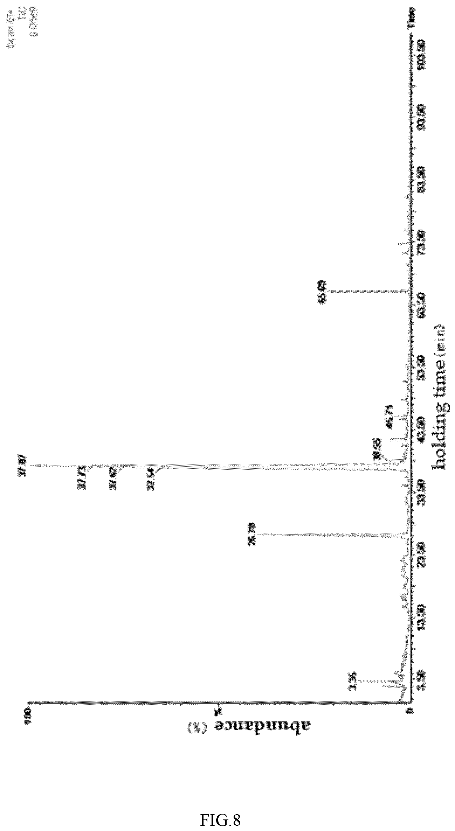

The thermogravimetric pyrolysis products are directly separated and analyzed by gas chromatography-mass spectrometry. The total ion chromatogram is shown in FIG.8. The conditions are as follows: chromatograph and mass spectrometer, the same as embodiment 2; pyrolysis substances are shown in Table 3.

**Table 3 All pyrolysis products of tobacco material B from 30°C to 600°C**

| **No.** | **Holding time (min)** | **Substance** | **Relative percentage content** |
|---|---|---|---|
| 1 | 11.974 | 5-Methylfuranaldehyde | 0.05 |
| 2 | 16.245 | (-)-Limonene | 0.06 |
| 3 | 16.264 | Benzyl alcohol | 0.02 |
| 4 | 28.73 | N, N'-Dibenzoyloxy-adipamide | 0.16 |
| *5* | 29.459 | 1,4:3,6-Dihydro- α-pyranose | 0.19 |
| 6 | 29.589 | Catechol | 0.18 |
| 7 | 30.15 | 5-Hydroxymethyl furaldehyde | 0.32 |
| 8 | 30.181 | α,α-4-Trimethylcyclohexyl methanol furfuryl alcohol | 19.69 |
| 9 | 30.324 | 2,3-Dihydrobenzofuran | 0.19 |
| 10 | 30.666 | (+)-Isomenthone | 0.36 |
| 11 | 31.113 | Glycerol monoacetate | 0.14 |
| 12 | 32.339 | Benzoic acid | 0.04 |
| 13 | 35.232 | 4-Vinyl-2-methoxyphenol | 0.25 |
| 14 | 37.476 | Nicotine | 69.64 |
| 15 | 38.429 | Solanone | 1.93 |
| 16 | 43.636 | Isoeugenol | 0.09 |
| 17 | 43.93 | Ethylvanillin | 0.18 |
| 18 | 45.344 | Nicotyrine | 0.13 |
| 19 | 52.768 | (4,5,5-Trimethyl-1,3-cyclopentadien-1-yl) benzene | 3.2 |
| 20 | 65.652 | Phytol | 2.11 |
| 21 | 65.82 | Fitone | 0.13 |
| 22 | 66.374 | Diisobutyl phthalate | 0.08 |
| 23 | 67.734 | Pentadecanal | 0.04 |
| | | **Total number of compounds** | **23** |

As is shown in FIG.5, tobacco material B has four thermal weight-loss steps, weight-loss ratios of each step are inconsistent: 3.6% for 30.3~106.3 °C, 17.9% for 106.6~219.3 °C, 44.2% for 219.3~392°C, and 26% for 392.2~500°C. Tobacco material does not have an obvious weight-loss stage. Except that weight-loss rate at the first stage is less, weight-loss rates at latter three stages are 20-45%. It shows that, the first temperature segment may be volatilization of water, a large number of volatile substances generate at the remaining three temperature segments.

Pyrolysis products of tobacco substances are analyzed by thermogravimetric-gas chromatography-mass spectrometry of the prior art. All pyrolysis products of the whole pyrolysis process go through GC/MS analysis, the total ion flow of the whole pyrolysis process is shown in FIG.8, and pyrolysis products are shown in Table 3. By using thermogravimetric-gas chromatography-mass spectrometry analysis of the prior art, pyrolysis products, due to low content and are brought by the carrier gas into the separation and detection system in the pyrolysis process, part are condensed at various interfaces and pipelines of the system, and part are lost to the lower point of the detection limit when they are transported to the detection system, making it difficult for the device to identify. Thus, only 23 substances are detected, much less than pyrolysis products detected by the present invention.

Meanwhile, the comparison does not respectively capture and analyze pyrolysis products at the four weight-loss stages, i.e., the four temperature segments, it is impossible to recognize main pyrolysis products at the four main weight-loss stages and changes of these products with temperature changes.

It can be seen that, comparison by using the prior art is only for capture and analysis of all pyrolysis substances, which cannot capture and analyze pyrolysis substances at any temperature point or segment, nor can it monitor changes of pyrolysis product content with temperature changes. However, the device of the present invention can be used to detect and analyze real-time changes of pyrolysis products at a certain temperature point or segment, as well as changes of pyrolysis product content with temperature changes. The above effects cannot be achieved by the prior art, thus having unique advantages. It can be seen that technical advantages of the present invention are obvious.

The above has shown and described basic principles, main features and advantages of the present invention. It should be understood by those skilled in the art that, the present invention is not limited by the above-mentioned embodiment, what is described in the above-mentioned embodiment and the description is only to illustrate the principle of the present invention, without departing from the scope of the present invention, the present invention may have various changes and improvements, which all fall within the scope of what is claimed. The claimed scope of the present invention is defined by the appended claims.

## Claims

1. A real-time online analysis device for substance pyrolysis, **characterized in that**, the device comprises: a pyrolyzing system (1), a capturing system (2), a testing system (3) and a controlling system (4); wherein:
the pyrolyzing system (1), the capturing system (2) and the testing system (3) are connected with the controlling system (4);
the capturing system (2) has a cooling cavity (22) and a heating cavity (23) inside, temperature of the cooling cavity (22) ranges from room temperature to -200°C, and temperature of the heating cavity (23) ranges from room temperature to 1000°C;
and wherein the capturing system (2) comprises the following components:
A horizontal moving slot (21);
A cooling cavity (22), arranged at one end of the horizontal moving slot (21);
The cooling cavity (22) has a cooling tube (221), which is connected with a cooling gas device (222); the cooling cavity (22) is in airtight connection with the pyrolyzing system (1) through a gas pipeline (5);
A heating cavity (23), arranged at the other end of the horizontal moving slot (21); the heating cavity (23) has a heating tube (231); the heating cavity (23) is in airtight connection with the testing system (3) through the gas pipeline (6);
A rotary collector (24) arranged on a horizontal moving slot (21) between the cooling cavity (22) and the heating cavity (23), which can slide along the horizontal moving slot (21) towards the cooling cavity (22) or the heating cavity (23); a plurality of collecting tubes (241) are provided on a rotary collector (24), and the plurality of collecting tubes (241) are arranged on the radius of the rotary collector (24);
A purging gas pipe (25) connected to the rotary collector (24).

2. The real-time online analysis device for substance pyrolysis according to claim 1, wherein, inside the cooling gas device (222) is liquid nitrogen, and the cooling temperature ranges from room temperature to -200°C; temperature of the heating tube (231) ranges from room temperature to 1000°C, and the heating rate range is 1°C/s ~ 300°C/s.

3. The real-time online analysis device for substance pyrolysis according to claim 1, wherein, the pyrolyzing system (1) comprises a pyrolyzing device (11) capable of providing programmed heating; gas is introduced into the pyrolyzing device (11) as carrier gas, which can be one or more of air, nitrogen, oxygen, helium, and argon, the gas flow rate is 0~2000 mL/min.

4. The real-time online analysis device for substance pyrolysis according to claim 1, wherein, the testing system (3) comprises a separation device (31) and a detection device (32); one end of the separation device (31) is in airtight connection with the heating cavity (23) through a gas pipeline (6), and the other end is connected with the detection device (32).

5. The real-time online analysis device for substance pyrolysis according to claim 4, wherein, the separation device (31) is a gas chromatograph; the detection device (32) is a mass spectrometer.

6. The real-time online analysis device for substance pyrolysis according to claim 1, wherein, the purging gas in the purging gas pipe (25) is one of nitrogen, helium or argon; the gas flow rate is 0~2000 mL/min.

7. The real-time online analysis device for substance pyrolysis according to claim 1, wherein, the collection tubes (241) are no less than eight.

8. A method for real-time online analysis of substance pyrolysis, **characterized in that**, the method uses the device of any of claims 1-7 and comprises the following steps:
The substances to be analyzed are placed in the pyrolyzing device (11), when the temperature is programmed to reach a set temperature point or segment under the control of the controlling system (4), the substances are heated at the set temperature point or segment for pyrolysis;
The rotary collector (24) moves along the horizontal moving slot (21) towards the cooling cavity (22), and fully extends a collection tube (241) carried by it into the cooling cavity (22), pyrolysis products are brought into the collection tube (241) by the carrier gas, the cooling tube (221) cools the carrier gas to make the pyrolysis products condense and adsorb in the collection tube (241); after collecting the pyrolysis products at this temperature point or segment, the collecting tube (241) is rotated by 180° by the rotary collector (24), and moves along the horizontal moving slot (21) towards the heating cavity (23);
The collecting tube (241) with pyrolysis products is fully extended into the heating cavity (23), and the heating tube (231) heats the heating cavity (23), the pyrolysis products condensed and adsorbed in the collecting tube (241) are heated for thermal desorption, which are fed by the purging gas in the purging gas pipe (25) into the separation device (31), after separated by the separation device (31), the pyrolysis products enter the detection device (32) and are analyzed online by the detection device (32);
Then substances at other temperature points or segments are pyrolyzed; by repeating the above steps, real-time online analysis of substance pyrolysis at a plurality of set temperature points or segments can be carried out.

## Patentansprüche

1. Eine Echtzeit-Online-Analysevorrichtung für die Pyrolyse von Substanzen, **dadurch gekennzeichnet, dass** die Vorrichtung umfasst: ein Pyrolyse-System (1), ein Auffangsystem (2), ein Testsystem (3) und ein Steuerungssystem (4); wobei:
das Pyrolyse-System (1), das Auffangsystem (2) und das Testsystem (3) mit dem Steuerungssystem (4) verbunden sind; das Auffangsystem (2) einen Kühlhohlraum (22) und einen Heizhohlraum (23) im Inneren aufweist, eine Temperatur des Kühlhohlraums (22) im Bereich von Raumtemperatur bis -200°C liegt und eine Temperatur des Heizhohlraums (23) im Bereich von Raumtemperatur bis 1000°C liegt;
und wobei das Auffangsystem (2) die folgenden Komponenten umfasst:
Einen horizontalen Bewegungsschlitz (21);
Einen Kühlhohlraum (22), der an einem Ende des horizontalen Bewegungsschlitzes (21) angeordnet ist; Der Kühlhohlraum (22) hat ein Kühlrohr (221), das mit einer Kühlgasvorrichtung (222) verbunden ist; der Kühlhohlraum (22) steht über eine Gasleitung (5) in luftdichter Verbindung mit dem Pyrolyse-System (1);
Einen Heizhohlraum (23), der am anderen Ende des horizontalen Bewegungsschlitzes (21) angeordnet ist; der Heizhohlraum (23) hat ein Heizrohr (231); der Heizhohlraum (23) steht über die Gasleitung (6) in luftdichter Verbindung mit dem Prüfsystem (3);
Einen auf einem horizontalen Bewegungsschlitz (21) zwischen dem Kühlhohlraum (22) und dem Heizhohlraum (23) angeordneten Drehsammler (24), der entlang des horizontalen Bewegungsschlitzes (21) in Richtung des Kühlhohlraums (22) oder des Heizhohlraums (23) gleiten kann; eine Vielzahl von Sammelrohren (241) sind an einem Drehsammler (24) bereitgestellt, und die Vielzahl von Sammelrohren (241) sind auf dem Radius des Drehsammlers (24) angeordnet;
Eine Spülgasleitung (25), die mit dem Drehsammler (24) verbunden ist.

2. Die Echtzeit-Online-Analysevorrichtung für die Pyrolyse von Substanzen gemäß Anspruch 1, wobei sich in der Kühlgasvorrichtung (222) flüssiger Stickstoff befindet und die Kühltemperatur im Bereich von Raumtemperatur bis -200°C liegt; Temperatur des Heizrohrs (231) im Bereich von Raumtemperatur bis 1000°C liegt und der Heizratenbereich 1°C/s ~ 300°C/s beträgt.

3. Die Echtzeit-Online-Analysevorrichtung für die Pyrolyse von Substanzen gemäß Anspruch 1, wobei das Pyrolyse-System (1) eine Pyrolyse-Vorrichtung (11) umfasst, die in der Lage ist, ein programmiertes Erhitzen bereitzustellen; Gas wird in die Pyrolyse-Vorrichtung (11) als Trägergas eingeleitet, bei dem es sich um eines oder mehrere aus Luft, Stickstoff, Sauerstoff, Helium und Argon handeln kann; die Gasflussrate beträgt 0~2000 ml/min.

4. Die Echtzeit-Online-Analysevorrichtung für die Pyrolyse von Substanzen gemäß Anspruch 1, wobei das Testsystem (3) eine Trennvorrichtung (31) und eine Detektionsvorrichtung (32) umfasst; ein Ende der Trennvorrichtung (31) steht über eine Gasleitung (6) in luftdichter Verbindung mit dem Heizhohlraum (23), und das andere Ende ist mit der Detektionsvorrichtung (32) verbunden.

5. Die Echtzeit-Online-Analysevorrichtung für die Pyrolyse von Substanzen gemäß Anspruch 4, wobei die Trennvorrichtung (31) ein Gaschromatograph ist und die Detektionsvorrichtung (32) ein Massenspektrometer ist.

6. Die Echtzeit-Online-Analysevorrichtung für die Pyrolyse von Substanzen gemäß Anspruch 1, wobei es sich bei dem Spülgas in der Spülgasleitung (25) um Stickstoff, Helium oder Argon handelt; die Gasflussrate beträgt 0~2000 ml/min.

7. Die Echtzeit-Online-Analysevorrichtung für die Pyrolyse von Substanzen gemäß Anspruch 1, wobei die Sammelrohre (241) nicht weniger als acht sind.

8. Ein Verfahren zur Echtzeit-Online-Analyse für die Pyrolyse von Substanzen, **dadurch gekennzeichnet, dass** das Verfahren die Vorrichtung nach einem der Ansprüche 1-7 verwendet und die folgenden Schritte umfasst:
Die zu analysierenden Substanzen werden in die Pyrolyse-Vorrichtung (11) eingebracht, wenn die Temperatur so programmiert ist, dass sie einen festgelegten Temperaturpunkt oder ein festgelegtes Temperatursegment unter der Steuerung des Steuerungssystems (4) erreicht, werden die Substanzen auf den festgelegten Temperaturpunkt oder das festgelegte Temperatursegment zur Pyrolyse erhitzt;
Der Drehsammler (24) bewegt sich entlang des horizontalen Bewegungsschlitzes (21) in Richtung des Kühlhohlraums (22) und fährt ein von ihm getragenes Sammelrohr (241) vollständig in den Kühlhohlraum (22) aus, Pyrolyseprodukte werden durch das Trägergas in das Sammelrohr (241) gebracht, das Kühlrohr (221) kühlt das Trägergas, um die Pyrolyseprodukte zu kondensieren und im Sammelrohr (241) zu adsorbieren; nach dem Sammeln der Pyrolyseprodukte bei diesem Temperaturpunkt oder -segment wird das Sammelrohr (241) durch den Drehsammler (24) um 180° gedreht und bewegt sich entlang des horizontalen Bewegungsschlitzes (21) in Richtung des Heizhohlraums (23);
Das Sammelrohr (241) mit Pyrolyseprodukten wird vollständig in den Heizhohlraum (23) ausgefahren, und das Heizrohr (231) heizt den Heizhohlraum (23) auf, die im Sammelrohr (241) kondensierten und adsorbierten Pyrolyseprodukte werden zur thermischen Desorption erhitzt, die durch das Spülgas in der Spülgasleitung (25) in die Trennvorrichtung (31) geleitet werden, nach der Trennung durch die Trennvorrichtung (31) treten die Pyrolyseprodukte in die Detektionsvorrichtung (32) ein und werden von der Detektionsvorrichtung (32) online analysiert;
Dann werden Substanzen an anderen Temperaturpunkten oder -segmenten pyrolysiert; durch Wiederholung der obigen Schritte kann eine Echtzeit-Online-Analyse der Substanzpyrolyse an einer Vielzahl von festgelegten Temperaturpunkten oder -segmenten durchgeführt werden.

## Revendications

1. Dispositif d'analyse en ligne en temps réel pour la pyrolyse de substances, **caractérisé en ce que** le dispositif comprend : un système de pyrolyse (1), un système de capture (2), un système d'essai (3) et un système de contrôle (4) ; dans lequel :
le système de pyrolyse (1), le système de capture (2) et le système d'essai (3) sont connectés avec le système de contrôle (4) ; le système de capture (2) a une cavité de refroidissement (22) et une cavité de chauffage (23) à l'intérieure ; la température de la cavité de refroidissement (22) va de la température ambiante à -200 °C, et la température de la cavité de chauffage (23) va de la température ambiante à 1000 °C ;
et dans lequel le système de capture (2) comprend les composants suivants :
Une fente mobile horizontale (21) ;
Une cavité de refroidissement (22), disposée à une extrémité de la fente mobile horizontale (21) ; La cavité de refroidissement (22) a un tube de refroidissement (221), qui est connecté avec un dispositif de gaz de refroidissement (222) ; la cavité de refroidissement (22) est en connexion étanche à l'air avec le système de pyrolyse (1) à travers d'un conduit de gaz (5) ;
Une cavité de chauffage (23), disposée à l'autre extrémité de la fente mobile horizontale (21) ; la cavité de chauffage (23) a un tube de chauffage (231) ; la cavité de chauffage (23) est en connexion étanche à l'air avec le système d'essai (3) à travers le conduit de gaz (6) ;
Un collecteur rotatif (24) disposé sur une fente mobile horizontale (21) entre la cavité de refroidissement (22) et la cavité de chauffage (23), qui peut glisser le long de la fente mobile horizontale (21) vers la cavité de refroidissement (22) ou la cavité de chauffage (23) ; une pluralité de tubes collecteurs (241) sont fournis sur un collecteur rotatif (24), et la pluralité de tubes collecteurs (241) sont disposés sur le rayon du collecteur rotatif (24).

2. Le dispositif d'analyse en ligne en temps réel pour la pyrolyse de substances selon la revendication 1,
dans lequel, à l'intérieur du dispositif de gaz de refroidissement (222) se trouve de l'azote liquide, et la température de refroidissement va de la température ambiante à -200 °C ; la température du tube de chauffage (231) va de la température ambiante à 1000 °C, et la plage de taux de chauffage est de 1°C/s ~ 300 °C/s.

3. Le dispositif d'analyse en ligne en temps réel pour la pyrolyse de substances selon la revendication 1, dans lequel le système de pyrolyse (1) comprend un dispositif de pyrolyse (11) capable de fournir un chauffage programmé ; du gaz est introduit dans le dispositif de pyrolyse (11) comme gaz porteur, qui peut être un ou plusieurs d'air, d'azote, d'oxygène, d'hélium et d'argon, le taux d'écoulement de gaz est de 0 ~ 2000 mL/min.

4. Le dispositif d'analyse en ligne en temps réel pour la pyrolyse de substances selon la revendication 1,
dans lequel le système d'essai (3) comprend un dispositif de séparation (31) et un dispositif de détection (32) ; une extrémité du dispositif de séparation (31) est en connexion étanche à l'air avec la cavité de chauffage (23) à travers un conduit de gaz (6), et l'autre extrémité est connectée avec le dispositif de détection (32).

5. Le dispositif d'analyse en ligne en temps réel pour la pyrolyse de substances selon la revendication 4,
dans lequel le dispositif de séparation (31) est un chromatographe en phase gazeuse ; le dispositif de détection (32) est un spectromètre de masse.

6. Le dispositif d'analyse en ligne en temps réel pour la pyrolyse de substances selon la revendication 1,
dans lequel le gaz de purge dans le tuyau de gaz de purge (25) est l'un d'azote, d'hélium ou d'argon ; le taux d'écoulement de gaz est de 0 ~ 2000 mL/min.

7. Le dispositif d'analyse en ligne en temps réel pour la pyrolyse de substances selon la revendication 1, dans lequel les tubes collecteurs (241) ne sont pas moins que huit.

8. Méthode d'analyse en ligne en temps réel pour la pyrolyse de substances, **caractérisée en ce que** la méthode utilise le dispositif de l'une quelconque des revendications 1 à 7 et comprend les étapes suivantes :
Les substances à analyser sont placées dans le dispositif de pyrolyse (11), lorsque la température est programmée pour atteindre un point ou un segment de température défini sous le contrôle du système de contrôle (4), les substances sont chauffées au point ou au segment de température défini pour la pyrolyse ;
Le collecteur rotatif (24) se déplace le long de la fente mobile horizontale (21) vers la cavité de refroidissement (22), et étend complètement un tube collecteur (241) porté par lui dans la cavité de refroidissement (22), des produits de pyrolyse sont amenés dans le tube collecteur (241) par le gaz porteur, le tube de refroidissement (221) refroidit le gaz porteur pour que les produits de pyrolyse se condensent et s'adsorbent dans le tube collecteur (241) ; après avoir recueilli les produits de pyrolyse à ce point ou segment de température, le tube collecteur (241) est tourné de 180° par le collecteur rotatif (24) et se déplace le long de la fente mobile horizontale (21) vers la cavité de chauffage (23) ;
Le tube collecteur (241) avec des produits de pyrolyse est complètement étendu dans la cavité de chauffage (23), et le tube de chauffage (231) chauffe la cavité de chauffage (23), les produits de pyrolyse condensés et adsorbés dans le tube collecteur (241) sont chauffés pour la désorption thermique, qui sont introduits par le gaz de purge dans le tuyau de gaz de purge (25) dans le dispositif de séparation (31), après avoir été séparés par le dispositif de séparation (31), les produits de pyrolyse entrent dans le dispositif de détection (32) et sont analysés en ligne par le dispositif de détection (32) ;
Puis, des substances à d'autres points ou segments de température sont pyrolysées ; en répétant les étapes ci-dessus, l'analyse en ligne en temps réel de la pyrolyse de substances à une pluralité de points ou segments de température définis peut être effectuée.
